(19) Europäisches Patentamt
European Patent Office
Office européen des brevets

(11) **EP 3 268 202 B1**

(12) **FASCICULE DE BREVET EUROPEEN**

(45) Date de publication et mention
de la délivrance du brevet:
**27.11.2019 Bulletin 2019/48**

(21) Numéro de dépôt: **16715006.9**

(22) Date de dépôt: **08.03.2016**

(51) Int Cl.:
***B29C 45/14*** *(2006.01)*   ***B32B 27/32*** *(2006.01)*
***B32B 27/34*** *(2006.01)*

(86) Numéro de dépôt international:
**PCT/FR2016/050532**

(87) Numéro de publication internationale:
**WO 2016/142621 (15.09.2016 Gazette 2016/37)**

(54) **PROCEDE DE SURMOULAGE D'UN COMPOSANT EN POLYAMIDE PAR UNE MATRICE POLYOLEFINE**

VERFAHREN ZUM UMSPRITZEN EINER POLYAMIDKOMPONENTE MIT EINER POLYOLEFINMATRIX

METHOD FOR OVERMOLDING A POLYAMIDE COMPONENT BY MEANS OF A POLYOLEFIN MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2015 FR 1551967**

(43) Date de publication de la demande:
**17.01.2018 Bulletin 2018/03**

(73) Titulaire: **Arkema France**
**92700 Colombes (FR)**

(72) Inventeurs:
• **HOCHSTETTER, Gilles**
**94240 L'hay Les Roses (FR)**

• **PALLUAULT, Vincent**
**27300 Saint Martin du Tilleul (FR)**

(74) Mandataire: **Gorintin, Sarah**
**ARKEMA France**
**Département Propriété Industrielle**
**420, rue d'Estienne d'Orves**
**92705 Colombes Cedex (FR)**

(56) Documents cités:
**EP-A2- 1 705 052     WO-A1-2005/018915**
**WO-A1-2007/118860     WO-A1-2011/154840**

**Description**

**Domaine de l'invention**

La présente invention concerne un procédé de surmoulage d'un composant en polyamide par une matrice polyoléfine. L'invention se rapporte plus précisément à une nature particulière de la matrice polyoléfine ainsi qu'à un traitement préalable spécifique du composant polyamide dans le but de réaliser un collage optimal entre ces deux éléments.

**Etat de l'art**

Le surmoulage est une technique de fabrication permettant d'associer les qualités et caractéristiques de deux matériaux, l'un (le matériau surmoulé) formant le cœur de la structure bi-couche tandis que l'autre forme sa peau. Néanmoins, le surmoulage de matériaux thermoplastiques ou essentiellement thermoplastiques présente des difficultés techniques importantes.

Par exemple, on connaît le document EP 1609577 qui décrit les difficultés d'associer, par surmoulage, des mousses thermoplastiques à un composant thermoplastique, lorsque l'on souhaite obtenir une épaisseur surmoulée sensiblement égale et en particulier lorsqu'il s'agit de réaliser de grandes pièces surmoulées.

On connaît également le document FR 2856003 qui divulgue la problématique de surmoulage plastique sur des éléments eux-mêmes plastiques tels que des vitres plastiques.

De manière générale, les thermoplastiques sont impropres au surmoulage ou très difficilement car cette technique n'autorise une bonne adhésion de deux thermoplastiques que lorsque ces derniers appartiennent à une même famille de composants.

On peut citer également le document US 2005/0001354 qui fait état d'un certain nombre de problématiques liées au surmoulage plastique.

EP-A-1,705,052 A1 montre un procédé selon le préambule de la revendication 1.

Sans être exhaustive, cette liste de documents présente certaines des difficultés inhérentes au surmoulage plastique, qui s'amplifient considérablement lorsqu'il s'agit de surmouler deux thermoplastiques (les deux matériaux, celui moulé et celui surmoulé, sont des thermoplastiques) de nature différentes.

En particulier, la première des conditions pour le surmoulage réside dans la bonne adhérence du matériau surmoulé, ou matériau de cœur, avec le matériau surmoulant, ou matériau formant la peau. Ainsi, le surmoulage de thermoplastiques de nature différente présente quasi-immanquablement de faibles propriétés d'adhésion des deux matériaux et ainsi des risques de délamination très élevés et non acceptables.

Néanmoins, cette technique de fabrication étant peu complexe et économique, il y a un intérêt certain à proposer une solution permettant le surmoulage plastique d'un matériau thermoplastique.

Ici, la présente invention s'intéresse plus particulièrement à deux plastiques les plus communément utilisés, à savoir le polyamide et le polypropylène. En effet, cette solution doit également être économiquement intéressante au regard des coûts habituels de thermoplastiques.

**Brève description de l'invention**

Il a été constaté par la demanderesse, après diverses expériences et manipulations, que, contrairement aux enseignements connus de l'homme du métier, il est possible de réaliser un surmoulage d'un composant en polyamide par une matrice polyoléfine à condition de prévoir sa modification de façon limitée, et donc économique, et un protocole de surmoulage bien spécifique.

Ainsi, l'invention a pour objet un procédé de surmoulage d'un composant en polyamide par une matrice polyoléfine, le composant en polyamide présentant une température de fusion $T_f$ et la matrice polyoléfine consistant en un mélange d'au moins une polyoléfine aliphatique non réactive et d'au moins une polyoléfine comportant une fonction réactive choisie parmi la famille des anhydrides, comportant une étape de surmoulage du composant polyamide par la matrice polyoléfine, cette dernière étant injectée à l'état fondue sur le composant polyamide,

caractérisé en ce que la polyoléfine comportant ladite fonction réactive représente entre 5% et 20% en poids de la susdite matrice et en ce que, préalablement à l'étape de surmoulage dudit composant par la matrice, au moins la surface dudit composant est chauffée à une température comprise dans un domaine compris entre $(T_f - 55)°C$ (degrés Celsius) et $(T_f - 20)°C$.

Il doit être entendu, dans le cadre de la présente invention, que le composant polyamide s'entend d'un matériau intégralement composé de polyamide, par exemple en PA6, PA11, ou de copolyamide tels que par exemple en PA6-10 bien connus de l'homme du métier, mais également d'un matériau composite constitué de fibres de renfort et d'une matrice en polyamide. Dans cette dernière perspective, la matrice polyamide peut représenter, comme cela est le cas dans l'exemple de réalisation présenté ci-après, une part minoritaire, voire très minoritaire, du matériau composite pour autant que le polyamide soit présent, de façon essentielle, sur les parties extérieures en contact (avec la matrice polyoléfine) du composant dit « composant polyamide ».

Ici, la température de fusion du composant polyamide considérée est 220°C mais bien entendu cette température peut être légèrement plus importante ou au contraire inférieure en fonction de la nature du polyamide choisi.

D'autres caractéristiques avantageuses de l'invention sont précisées dans la suite :

- de préférence, la polyoléfine aliphatique consiste en du polypropylène.
- préférentiellement, le susdit domaine de température est compris entre (Tf - 40) °C (degrés Celsius) et (Tf - 30)°C.
- avantageusement, la fonction réactive appartient à la famille des anhydrides d'acide dicarboxylique insaturé, préférentiellement consiste en l'anhydride maléique.
- de préférence, la fonction réactive représente de 0,5% à 4% en poids de la polyoléfine comportant la fonction réactive.
- selon une possibilité offerte par l'invention, la matrice polyoléfine comprend un adjuvant fonctionnel, présent à une hauteur maximum de 20% en poids de ladite matrice, consistant en un ou plusieurs plastifiants, promoteurs d'adhésion, stabilisants UV et/ou absorbeurs UV, antioxydants, retardateurs de flamme, colorants/azurants, pigments.
- selon une possibilité offerte par l'invention, le composant polyamide comprend jusqu'à au plus 90% en poids d'au moins un composé différent, de préférence des fibres de verre ou de carbone.

La présente invention se rapporte également à une structure bicouche directement obtenu par le procédé susvisé, comprenant :

- une couche formée d'un composant en polyamide présentant une température de fusion $T_f$, et
- une couche formée d'une matrice polyoléfine consistant en un mélange d'au moins une polyoléfine aliphatique non réactive et d'au moins une polyoléfine comportant une fonction réactive choisie parmi la famille des anhydrides, la polyoléfine comportant ladite fonction réactive représente entre 5% et 20% en poids de la susdite matrice

caractérisée en ce que la polyoléfine comportant ladite fonction réactive représente entre 5% et 20% en poids de la susdite matrice et la susdite matrice est surmoulée sur ledit composant.

Il doit être noté que, dans la suite, la composition selon l'invention est présentée en lien avec une matrice polyoléfine essentiellement, voire totalement, composée de polypropylène mais il est clair que bien que l'invention a été découverte avec le polypropylène, d'autres polyoléfines aliphatiques, telles que par exemple différentes variétés de polyéthylènes, ont été testés et des résultats sensiblement similaires ont été obtenus.

Ainsi, le choix et l'intérêt premier du polypropylène est principalement lié à son faible coût mais des tests similaires concluants ont été obtenus avec d'autres polyoléfines, tels que par exemple des polyéthylènes ou de l'éthylène.

D'autres détails et caractéristiques avantageuses de l'invention ressortent de la description détaillée faite ci-après en référence éventuellement aux figures annexées qui montrent :

- la figure 1 représente schématiquement le principe du premier test de résistance au cisaillement inter-laminaire ayant servi à appréhender l'invention ;

- la figure 2 représente schématiquement le principe du test de clivage en coin ayant également servi à déterminer l'invention.

## Description détaillée de l'invention

S'agissant de la polyoléfine aliphatique non réactive de la matrice polyoléfine, c'est un polymère comprenant comme monomère une alpha-oléfine.

On préfère les alpha-oléfines oyant de 2 à 30 atomes de carbone.

A titre d'alpha-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétrodécène, 1-hexodécène, 1-octodécène, 1-eicocène, 1-dococène, 1-tétrococène, 1-hexococène, 1-octococène, et 1-triocontène. On préfère l'éthylène comme alpha-oléfine.

Cette polyoléfine peut-être un homopolymère lorsqu'une seule alpha-oléfine est polymérisée dons la chaîne polymère. On peut citer comme exemples le polyéthylène (PE) ou le polypropylène (PP). De préférence, la polyoléfine consiste en du polypropylène (PP).

Cette polyoléfine peut aussi être un copolymère lorsque au moins deux comonomères sont copolymérisés dons la chaîne polymère, l'un des deux comonomères dit le« premier comonomère » étant une alpha-oléfine.

A titre de deuxième comonomère, on peut citer :

- une des alpha-oléfines déjà citées, celle-ci étant différente du premier comonomère alpha-oléfine,
- les diènes tels que par exemple le 1 ,4-hexodiène ou l'éthylidène norbornène,
- les esters d'acides carboxyliques insaturés tels que par exemple les ocrylotes d'alkyle ou les méthacrylates d'alkyle regroupés sous le terme (méth)ocrylotes d'alkyles. Les chaînes alkyles de ces (méth)ocrylotes peuvent avoir jusqu'à 30 atomes de carbone, avantageusement de 1 à 12 atomes de carbone, préférentiellement de 1 à 6 atomes de carbone.

On peut citer comme chaînes alkyles le méthyle, l'éthyle, le propyl, nbutyl, sec-butyl, Isobutyl, tert-butyl, pentyl, hexyl, heptyl, octyl, 2-ethylhexyl, nonyl, decyl, undecyl, dodecyl, tridecyl, tetrodecyl, pentodecyl, hexodecyl, heptodecyl, octodecyl, nonodecyl, eicosyl, hencosyl, docosyl, tricosyl, tetrocosyl, pentocosyl, hexocosyl, heptocosyl, octocosyl, nonocosyl. On préfère les (meth)ocrylotes de méthyle, éthyle et butyle comme esters d'acide carboxylique insaturés.

- les esters vinyliques d'acide carboxyliques. A titre d'exemples d'esters vinyliques d'acide carboxylique, on peut citer l'acétate de vinyle, le versotote de vinyle, le propionote de vinyle, le butyrate de vinyle, ou le moléote de vinyle. On préfère l'acétate de vinyle comme ester vinylique d'acide carboxylique.

On ne sortirait pas du cadre de l'invention si différents «deuxièmes comonomères »étaient copolymérisés dons la polyoléfine.

De préférence, cette polyoléfine aliphatique non réactive consiste essentiellement en du polypropylène, c'est un polypropylène homo- ou copolymère. A titre d'exemple préféré, on peut ainsi citer :

- le polypropylène
- les mélanges de polypropylène et d'EPDM (« ethylene propylene diene monomer ») ou d'EPR (« Ethylene Propylene Rubber »), bien connus de l'homme du métier, pouvant contenir en outre 1% à 20% de polyéthylène.

S'agissant de la polyoléfine contenant une fonction réactive, la polyoléfine peut consister en une polyoléfine identique ou différente de la polyoléfine aliphatique présentée ci-dessus.

S'agissant de la fonction réactive de la polyoléfine (monomère X), il s'agit d'un composant de la famille des anhydrides organique (par opposition aux anhydrides inorganiques tels que le pentoxyde d'azote ou le trioxyde d'azote).

De préférence, la fonction réactive (monomère X) consiste en des anhydrides d'acide carboxylique. Des exemples d'anhydrides d'acide dicarboxylique insaturé sont notamment l'anhydride maléique, l'anhydride itaconique, l'anhydride citraconique, l'anhydride tétrahydrophtalique

Ils peuvent ainsi être choisis par exemple parmi les anhydrides maléique, itoconique, citroconique, ollylsuccinique, cyclohex-4-ène-1,2-dicarboxylique, 4-méthylènecyclohex-4-ène-1,2-dicarboxylique, bicyclo(2,2,1) hept-5-ène-2,3-dicarboxylique, et x-méthylbicyclo(2,2,1)hept-5-ène-2,2-dicarboxylique.

Le monomère fonctionnel (X) peut être copolymérisé dans la chaîne de la polyoléfine par procédé autoclave ou tubulaire, ou/et être greffé sur la polyoléfine. La polymérisation par procédé autoclave ou tubulaire des différents monomères (alpha-oléfine, comonomère(s)) avec le monomère fonctionnel (X) est bien connue de l'homme du métier. De même, le greffage est une opération connue en soi.

La polyoléfine contenant le monomère fonctionnel (X), ou fonction réactive, serait conforme à l'invention si plusieurs monomères fonctionnels (X) différents étaient copolymérisés ou/et greffés.

Concernant l'adjuvant fonctionnel, présent optionnellement dans la matrice polyoléfine, il peut être présent dans la composition à une hauteur maximum de 20% en poids de la composition et sera choisi limitativement parmi les composés mentionnés ci-après ou un mélange de ces composés.

Des plastifiants pourront être ajoutés à la composition selon l'invention afin de faciliter la mise en œuvre et améliorer la productivité du procédé de fabrication de la composition et des structures. On citera comme exemples les huiles minérales paraffiniques aromatiques ou naphtaléniques qui permettent également d'améliorer le pouvoir d'adhérence de la composition selon l'invention. On peut également citer comme plastifiant les phtalates, azelates, adipates, le phosphate de ticrésyle.

De la même manière, des promoteurs d'adhésion, bien que non nécessaires, peuvent être avantageusement ajoutés afin d'améliorer le pouvoir d'adhérence de la composition lorsque celui-ci doit être particulièrement élevé. Le promoteur d'adhésion est un ingrédient non polymérique ; il peut être organique, cristallin, minéral et plus préférentiellement semi-minéral semi-organique. Parmi ceux-ci, on peut citer les titanates ou les silanes organiques, comme par exemple les monoalkyl titanates, les trichlorosilanes et les trialkoxysilanes, les trialcooxysilane. On pourra également prévoir que ces promoteurs d'adhésion sont directement greffés sur le premier ou le second copolymère par une technique bien connue de l'homme du métier, par exemple via l'extrusion réactive.

Le rayonnement UV étant susceptible d'entraîner un léger jaunissement des compositions thermoplastiques, des stabilisants UV et des absorbeurs UV (ces composés étant dénommés de manière générale des agents anti-UVs) tels que le benzotriazole, le benzophénone et les autres amines encombrés, peuvent être ajoutés dans certaines applications où un tel phénomène doit être évité. Ces composés peuvent être par exemple à base de benzophénone ou de benzotriazole. On peut les ajouter dans des quantités inférieures à 10% en masse de la masse totale de la composition et préférentiellement de 0,1 à 5%.

On pourra également ajouter des anti-oxydants pour limiter le jaunissement lors de la fabrication de la composition tels que les composés phosphorés (phosphonites et/ou phosphites) et les phénoliques encombrés. On peut ajouter ces anti-oxydants dans des quantités inférieures à 10% en masse de la masse totale de la composition et préférentiellement de 0,05 à 5%.

De la même manière, dans certaines applications, des agents retardateurs de flamme peuvent également être ajoutés à la composition selon l'invention. Ces agents peuvent être halogénés ou non-halogénés. Parmi les agents halogénés, on peut citer les produits bromés. On peut également utiliser comme agent non-halogéné les additifs à base de phosphore tels que le polyphosphate d'ammonium, les phosphinates et phosphonates d'aluminium, le cyanurate de mélamine, le pentaérythritol, les zéolithes ainsi que les mélanges de ces agents. La composition peut comprendre ces agents dans des proportions allant de 3 à 20% par rapport à la masse totale de la composition. On pourra également ajouter des composés colorants ou azurants.

On peut également ajouter à la composition des pigments comme par exemple du dioxyde de titane ou de l'oxyde de zinc dans des proportions allant généralement de 5 à 15% par rapport à la masse totale de la composition.

On peut également ajouter à la composition des charges renforçantes telles que le talc, les fibres de verre, les fibres de carbone, les montmorillonites, les nanotubes de carbone, le noir de carbone, dans des proportions allant généralement de 2,5 à 90% par rapport à la masse totale de la composition.

S'agissant du composant polyamide, ou essentiellement en polyamide, il consiste soit des homopolyamides, soit en des copolyamides.

Sont notamment visés les homopolyamides aliphatiques qui résultent de la polycondensation :

- d'un lactame,
- ou d'un acide alpha, omega-aminocarboxylique aliphatique,
- ou d'une diamine aliphatique et d'un diacide aliphatique.

A titre d'exemples de lactame, on peut citer le caprolactame, l'oenantholactame et le lauryllactame.

A titre d'exemples d'acide alpha, omega-aminocarboxylique aliphatique, on peut citer l'acide aminocaproïque, l'acide amino-7-heptanoïque, l'acide amino-11-undécanoïque et l'acide amino-12-dodécanoïque.

A titre d'exemples de diamine aliphatique, on peut citer l'hexaméthylènediamine, la dodécaméthylènediamine et la triméthylhexaméthylène diamine.

A titre d'exemples de diacide aliphatique, on peut citer les acides adipique, azélaïque, subérique, sébacique et dodécanedicarboxylique.

Parmi les homopolyamides aliphatiques, on peut citer, à titre d'exemple et de façon non limitative, les polyamides suivants : le polycaprolactame (PA6) ; le polyundécanamide (PA 11, commercialisé par ARKEMA sous la marque Rilsan®) ; le polylauryllactame (PA12, également commercialisé par ARKEMA sous la marque Rilsan®) ; le polybutylène adipamide (PA4.6) ; le polyhexaméthylène adipamide (PA6.6) ; le polyhexaméthylène azélamide (PA6.9) ; le polyhexaméthylène sébaçamide (PA-6.1 0) ; le polyhexaméthylène dodécanamide (PA6.12); le polydécaméthylène dodécanamide (PA10.12); le polydécaméthylène sébaçanamide (PA 10.1 0) et le polydodécaméthylène dodécanamide (PA12.12).

Sont également visés les homopolyamides cycloaliphatiques.

On peut notamment citer les homopolyamides cycloaliphatiques qui résultent de la condensation d'une diamine cycloaliphatique et d'un diacide aliphatique.

A titre d'exemple de diamine cycloaliphatique, on peut citer la 4,4'méthylène-bis(cyclohexylamine), encore dénommée para-bis(aminocyclohexyl) méthane ou PACM, la 2,2'-diméthyl-4,4'méthylène-bis(cyclo-hexyl-amine), encore dénommée bis-(3-méthyl-4-aminocyclohexyl)-méthane ou BMACM.

Parmi les homopolyamides cycloaliphatiques, on peut citer les polyamides PACM.12, résultant de la condensation du PACM avec le diacide en C12, les BMACM.10 et BMACM.12 résultant de la condensation de la BMACM avec, respectivement, les diacides aliphatiques en C 10 et en C 12.

Les copolyamides couvrent notamment les produits de condensation

- d'au moins deux lactames,
- d'au moins deux acides alpha, omega-aminocarboxyliques aliphatiques,
- d'au moins un lactame et d'au moins un acide alpha,omega-aminocarboxylique aliphatique,
- d'au moins deux diamines et d'au moins deux diacides,
- d'au moins un lactame avec au moins une diamine et au moins un diacide,
- d'au moins un acide alpha,omega-aminocarboxylique aliphatique avec au moins une diamine et au moins un diacide, le(les) diamine(s) et le(s) diacide(s) pouvant être, indépendamment l'un de l'autre, aliphatiques, cycloaliphatiques ou aromatiques.

Selon les types et ratio de monomères, les copolyamides peuvent être semi-cristallins ou amorphes. Dons le cas des copolyamides amorphes, seule la température de transition vitreuse est observée, tandis que dans celui des copolyamides semi-cristallins une température de transition vitreuse et une température de fusion (qui sera nécessairement supérieure) sont observées.

Parmi les copolyamides amorphes que l'on peut utiliser dons le cadre de l'invention, on peut citer par exemple les copolyamides contenant des monomères semi-aromatiques.

Parmi les copolyamides, on pourra également utiliser les copolyamides semi-cristallins et particulièrement ceux de type PA 6/11, PA6/12 et PA6/11/12.

Le degré de polymérisation peut varier dons de larges proportions, selon sa valeur c'est un polyamide ou un oligomère de polyamide.

Comme cela a été présenté précédemment, l'expression « composant polyamide » est entendu ici comme signifiant que ledit composant présente en surface, c'est-à-dire pour former la jonction ou l'adhérence avec le thermoplastique surmoulé, essentiellement (à au moins 80%) un « polyamide » selon la définition de ce terme présentée ci-dessus.

Ainsi, le « composant polyamide » selon l'invention peut consister en un matériau composite présentant une matrice « polyamide » dans laquelle se trouve noyée ou incluse des fibres, telles que par exemple des fibres carbone ou des fibres de verre ; la proportion desdites fibres dans ledit composant polyamide pouvant représenter jusqu'à un maximum de 90% en poids dans l'ensemble formant le « composant polyamide » (et représentant jusqu'à 70% en volume dudit « composant polyamide »).

L'ensemble des composants et thermoplastiques présentés ci-dessus sont bien connus de l'homme du métier qui sait les préparer, selon différentes techniques.

Par ailleurs, le procédé de surmoulage est une technique bien connue de l'homme du métier et seule une présentation particulière va être décrite ci-dessous, en lien avec une structure bi-couche ayant fait l'objet de tests mécaniques et d'adhésion des deux matériaux (cœur-peau). Bien entendu, de nombreux tests ont été réalisés pour vérifier l'invention objet de la présente demande de brevet et pourront être fournis si nécessaire.

Présentation des tests réalisés :

Ainsi, dans l'une des structures bi-couches réalisées, le composant polyamide a consisté en un composite unidirectionnel, composé de 80% en poids de fibres de verre et de 20% en poids de PA6 (température de fusion Tf égale à 220°C). Ce composant est découpé en barreaux présentant les dimensions suivantes : 127 mm x 1 mm x 12,5 mm (« mm » signifie millimètre).

La couche de la matrice polyoléfine surmoulée faisait deux millimètres dans tous les cas d'expérimentations.

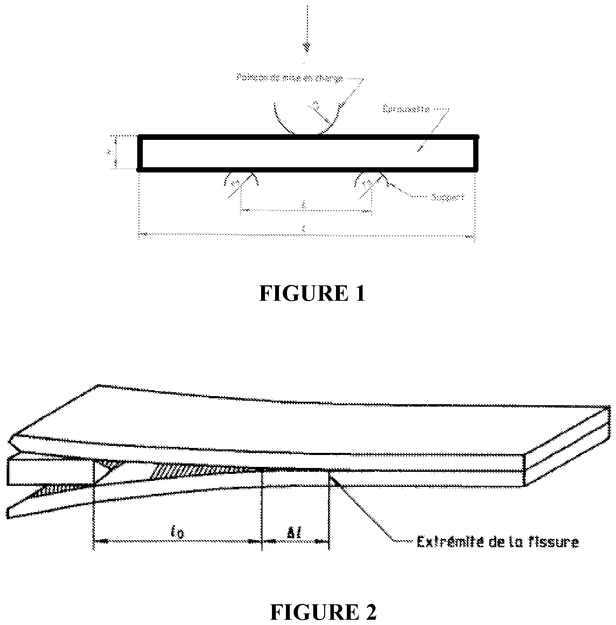

Dans le cas de la préparation d'éprouvettes utilisées pour le test de clivage en coin, un scotch aluminium est déposé sur une partie de la surface de l'insert (composant polyamide) avant le surmoulage, de façon à laisser une zone sans contact entre la couche surmoulée et l'insert composite, à l'extrémité du barreau bicouche. La longueur de non cohésion était de 30 mm, ce qui correspond à la longueur initiale de la fissure avant le début de l'essai (cf. figure 1).

Plusieurs expériences de surmoulage ont été menées, en changeant la température de préchauffage du composant polyamide (avant son introduction dans le moule) et la température du moule (toujours prise identique à la température de préchauffage du composant polyamide).

Dans tous les cas, les conditions d'injection de la matrice polyoléfine étaient :

- Température alimentation : 220°C (degrés Celsius)
- Température buse : 240°C
- Pression d'injection de 300 bars.

Le démoulage s'est fait dans tous les cas après retour de la température du moule à 80°C.

Deux types d'essais mécaniques ont été réalisés, l'un sollicitant l'interface en cisaillement (test CIL), l'autre sollicitant les résistances à la propagation d'une fissure à l'interface entre l'insert composite (composant polyamide) et le polymère (matrice polyoléfine) surmoulé (test de clivage en coin).

La norme ISO 14130 décrit la détermination de la résistance au cisaillement inter-laminaire en réalisant un essai de flexion sur appuis rapprochés (cf. figure 1), dont la valeur est typiquement égale à un faible multiple de l'épaisseur du barreau, ici dans notre cas nous avons pris un écart entre les appuis de 10 mm.

Cette norme s'applique normalement exclusivement au composites, homogènes dans l'épaisseur du barreau de flexion utilisé pour les essais et présentant un comportement linéaire élastique fragile.

Dans le cas de la présente structure bi-couche, on s'est inspiré de cette norme pour mettre en jeu un fort cisaillement à l'interface du composant polyamide et de la couche de polyoléfine surmoulée.

Le dépouillement, ou le résultat, de l'essai est différent de celui de la norme en ce sens que l'on se borne à comptabiliser les nombre de barreaux de flexion présentant un décollement de la couche surmoulée.

En effet, les conditions d'application strictes de la norme ne sont pas remplies, en particulier le comportement mécanique du barreau bi-couche est fortement non linéaire, contrairement à ce qui est préconisé dans la norme ISO 14130.

Dans tous les cas, les essais ont été réalisés avec une vitesse de traverse de 1 mm/mn (millimètre par minute).

Le second test mesurant l'adhésion, à savoir le test de clivage, est illustré sur la figure 2. Le test consiste à pousser un coin entre les deux couches, celle du composant polyamide et celle de la matrice polyoléfine, et à mesurer la longueur de la fissure au moment ou une avancée de la pointe dans la fissure est constatée.

On peut reproduire plusieurs fois l'expérience sur un même barreau. La 1ère valeur mesurée, correspondant à la première propagation n'est pas prise en compte car elle est trop dépendante des conditions de fabrication de la structure bicouche.

Les valeurs obtenues à partir des propagations suivantes constituent le résultat du test.

Par analogie avec le calcul du taux de restitution d'énergie lors du clivage en coin d'une poutre ou éprouvette bi-couche homogène, dans le cas d'une structure bi-couche hétérogène, on estimera le taux de restitution d'énergie $G_{1c}$ : par la formule suivante:

$$G_{1c} = \frac{3}{32}\frac{e}{a^4}\left[E_c h_c^3 R_c^2 + E_p h_p^3 R_p^2\right]$$

$$R_c = \frac{h_p^3 E_p}{h_p^3 E_p + h_c^3 E_c}$$

$$R_p = \frac{h_c^3 E_c}{h_p^3 E_p + h_c^3 E_c}$$

Avec :

$G_{1c}$ : taux de restitution d'énergie (kJ/m2)
$E_c$ : module d'Young du composite
$E_p$ : module d'Young du polymère surmoulé
$h_c$ : épaisseur du composite
$h_p$ : épaisseur du polymère surmoulé
$R_c$ : rapport de rigidité de la poutre polymère par rapport à la somme des rigidités des poutres polymère et composite.
$R_p$ : rapport de rigidité de la poutre composite par rapport à la somme des rigidités des poutres polymère et composite.

Résultats des tests

_Concernant le test de résistance au cisaillement inter-laminaire :_

Les surmoulages du composant polyamide par une matrice polyoléfine entièrement constituée de polypropylène (non fonctionnalisé ou réactive) ne présentent aucune adhésion - la matrice polyoléfine se décolle spontanément du composant polyamide - sur le composant polyamide pour toutes les températures de préchauffage dudit composant, soit les températures de 100°C, 140°C, 160°C, 180°C, 190°C et 200°C.

Dans un second cas, la matrice polyoléfine comprend cette fois-ci 10% de polypropylène greffé de marque Orevac® (PP greffé avec 1% en poids d'anhydride maléique) de la société Arkema de telle sorte que, dans cette configuration, la fonction réactive représente 0,1 % en poids de la matrice polyoléfine.

Le compoundage a été réalisé sur une extrudeuse bi-vis de petite dimension, de marque Haake 2.

Plusieurs surmoulages du composant polyamide par la matrice polyoléfine susvisée ont été réalisés par injection dans les conditions décrites ci-dessus, dans un moule chauffé successivement à 80°C, 120°C, 160°C, 170°C, 180°C, 190°C et 200°C, le composant polyamide étant préchauffé pendant 1 mn à la température du moule.

Après refroidissement, les barreaux bi-couches ont été testés et les résultats sont reportés dans le tableau I, ci-dessous.

Tableau I

| Température de préchauffage du moule et de l'insert composite (°C) | 80 | 120 | 160 | 170 | 180 | 190 | 200 |
|---|---|---|---|---|---|---|---|
| % décollement (mesuré sur 5 barreaux) | 100 | 100 | 50 | 25 | 0 | 0 | 2 |

Dans un second cas, la matrice polyoléfine comprend cette fois-ci 18 % de polypropylène greffé de marque Orevac® (PP greffé avec 1% en poids d'anhydride maléique) de la société Arkema de telle sorte que, dans cette configuration, la fonction réactive représente 0,18 % en poids de la matrice polyoléfine.

Les mêmes conditions opératoires que précédemment décrites sont réalisées et les résultats suivants sont relevés :

Tableau II

| Température de préchauffage du moule et de l'insert composite (°C) | 80 | 120 | 160 | 170 | 180 | 190 | 200 |
|---|---|---|---|---|---|---|---|
| % décollement (mesuré sur 5 barreaux) | 100 | 100 | 25 | 0 | 0 | 0 | 2 |

Il a par ailleurs été constaté qu'au-delà de 4-5% en poids de fonctions réactives présentes dans la matrice polyoléfine, les propriétés mécaniques de la matrice polyoléfine, notamment son allongement à rupture, se dégradait sensiblement.

*Concernant le test de clivage en coin :*

Les éprouvettes du second cas susvisés, représentant respectivement avec 0,1 % et 0,18 % en poids de fonction réactive dans la polyoléfine, ont été testées dans une même série dans les mêmes conditions d'injection et de préchauffage que précédemment, mais en utilisant des composants polyamides (éprouvettes) partiellement recouvert d'un scotch aluminium, de façon à pouvoir faire des essais de clivage en coin.

Les résultats sont répertoriés dans le tableau suivant :

Tableau III

| Température de préchauffage du moule et de l'insert composite (°C) | 80 | 120 | 160 | 170 | 180 | 190 | 200 |
|---|---|---|---|---|---|---|---|
| G1c (KJ/m$^2$) pour les éprouvettes à 1,5% de fonction réactive | 0 | 0 | 0,1-0,2 | 0,2-0,2 | > 2 | > 2 | 1,8 |
| G1c (KJ/m$^2$) pour les éprouvettes à 3% de fonction réactive | 0 | 0 | 0,1-0,2 | 0,2-0,2 | > 2 | > 2 | 1,9 |

On notera que lorsque la valeur excède 2 kJ/m$^2$, on ne donne pas de valeur car les conditions du test ne respectent plus celle de la théorie (LEFM) car l'adhérence devient suffisamment bonne pour qu'une déformation plastique significative de la couche surmoulée (matrice polyoléfine) apparaisse.

**Revendications**

1. Procédé de surmoulage d'un composant en polyamide par une matrice polyoléfine, le composant en polyamide présentant une température de fusion $T_f$ et la matrice polyoléfine consistant en un mélange d'au moins une polyoléfine aliphatique non réactive et d'au moins une polyoléfine comportant une fonction réactive choisie parmi la famille des anhydrides, comportant une étape de surmoulage du composant polyamide par la matrice polyoléfine, cette dernière étant injectée à l'état fondue sur le composant polyamide,
**caractérisé en ce que** la polyoléfine comportant ladite fonction réactive représente entre 5% et 20% en poids de la susdite matrice et **en ce que**, préalablement à l'étape de surmoulage dudit composant par la matrice, au moins la surface dudit composant est chauffée à une température comprise dans un domaine compris entre (Tf - 55)°C (degrés Celsius) et (Tf - 20)°C.

**2.** Procédé selon la revendication 1, **caractérisé en ce que** la polyoléfine aliphatique consiste en du polypropylène.

**3.** Procédé selon l'une des revendications 1 ou 2, **caractérisé en ce que** le susdit domaine de température est compris entre (Tf - 40) °C (degrés Celsius) et (Tf - 30)°C.

**4.** Procédé selon l'une des revendications 1 à 3, **caractérisée en ce que** la fonction réactive appartient à la famille des anhydrides d'acide dicarboxylique insaturé, préférentiellement consiste en l'anhydride maléique.

**5.** Procédé selon l'une des revendications 1 à 4, **caractérisée en ce que** la fonction réactive représente de 0,5% à 4% en poids de la polyoléfine comportant la fonction réactive.

**6.** Procédé selon l'une quelconque des revendications précédentes, **caractérisé en ce que** la matrice polyoléfine comprend un adjuvant fonctionnel, présent à une hauteur maximum de 20% en poids de ladite matrice, consistant en un ou plusieurs plastifiants, promoteurs d'adhésion, stabilisants UV et/ou absorbeurs UV, antioxydants, retardateurs de flamme, colorants/azurants, pigments.

**7.** Procédé selon l'une des revendications précédentes, **caractérisée en ce que** le composant polyamide comprend jusqu'à au plus 90% en poids d'au moins un composé différent, de préférence des fibres de verre ou de carbone.

## Patentansprüche

**1.** Verfahren zum Überspritzen einer Polyamid-Komponente mit einer Polyolefin-Matrix, wobei die Polyamid-Komponente einen Schmelzpunkt $T_f$ aufweist und die Polyolefin-Matrix aus einer Mischung von mindestens einem unreaktiven aliphatischen Polyolefin und mindestens einem Polyolefin mit einer reaktiven Funktion, die aus der Familie der Anhydride ausgewählt ist, besteht, umfassend einen Schritt des Überspritzens der Polyamid-Komponente mit der Polyolefin-Matrix, wobei Letztere in schmelzflüssigem Zustand auf die Polyamid-Komponente gespritzt wird, **dadurch gekennzeichnet, dass** das Polyolefin mit der reaktiven Funktion zwischen 5 und 20 Gew.-% der obigen Matrix ausmacht und dass vor dem Schritt des Überspritzens der Komponente mit der Matrix mindestens die Oberfläche der Komponente auf eine Temperatur in einem Bereich zwischen $(T_f-55)$°C (Grad Celsius) und $(T_f-20)$°C erhitzt wird.

**2.** Verfahren nach Anspruch 1, **dadurch gekennzeichnet, dass** das aliphatische Polyolefin aus Polypropylen besteht.

**3.** Verfahren nach Anspruch 1 oder 2, **dadurch gekennzeichnet, dass** der obige Temperaturbereich zwischen $(T_f-40)$°C (Grad Celsius) und $(T_f-30)$°C liegt.

**4.** Verfahren nach einem der Ansprüche 1 bis 3, **dadurch gekennzeichnet, dass** die reaktive Funktion zur Familie der Anhydride von ungesättigten Carbonsäuren gehört und vorzugsweise aus Maleinsäureanhydrid besteht.

**5.** Verfahren nach einem der Ansprüche 1 bis 4, **dadurch gekennzeichnet, dass** die reaktive Funktion 0,5 bis 4 Gew.-% des Polyolefins mit der reaktiven Funktion ausmacht.

**6.** Verfahren nach einem der vorhergehenden Ansprüche, **dadurch gekennzeichnet, dass** die Polyolefin-Matrix ein funktionelles Adjuvans umfasst, das in einer Maximalmenge von 20 Gew.-% der Matrix vorliegt und aus einem oder mehreren Weichmachern, Haftvermittlern, UV-Stabilisatoren und/oder UV-Absorbern, Antioxidantien, Flammschutzmitteln, Farbstoffen/Aufhellern und Pigmenten besteht.

**7.** Verfahren nach einem der vorhergehenden Ansprüche, **dadurch gekennzeichnet, dass** die Polyamid-Komponente bis zu höchstens 90 Gew.-% mindestens einer anderen Verbindung, vorzugsweise Glas- oder Kohlefasern, umfasst.

## Claims

**1.** Method for overmoulding a polyamide component by means of a polyolefin matrix, the polyamide component having a melting point $M_p$ and the polyolefin matrix consisting of a mixture of at least one non-reactive aliphatic polyolefin and at least one polyolefin comprising a reactive function chosen from the anhydride family, comprising a step of overmoulding the polyamide component by means of the polyolefin matrix, said matrix being injected in the molten state onto the polyamide component,
**characterized in that** the polyolefin comprising said reactive function represents between 5% and 20% by weight of the abovementioned matrix and **in that**, prior to the step of overmoulding said component by means of the matrix, at least the surface of said component is heated to a temperature in a range between $(M_p - 55)°C$ (degrees Celsius) and $(M_p - 20)°C$.

2. Method according to Claim 1, **characterized in that** the aliphatic polyolefin consists of polypropylene.

3. Method according to either of Claims 1 and 2, **characterized in that** the abovementioned temperature range is between $(M_p - 40)°C$ (degrees Celsius) and $(M_p - 30)°C$.

4. Method according to one of Claims 1 to 3, **characterized in that** the reactive function belongs to the unsaturated dicarboxylic acid anhydride family, and preferentially consists of maleic anhydride.

5. Method according to one of Claims 1 to 4, **characterized in that** the reactive function represents from 0.5% to 4% by weight of the polyolefin comprising the reactive function.

6. Method according to any one of the preceding claims, **characterized in that** the polyolefin matrix comprises a functional adjuvant, present in a maximum amount of 20% by weight of said matrix, consisting of one or more plasticizers, adhesion promoters, UV-stabilizers and/or UV-absorbers, antioxidants, flame retardants, dyes/brighteners and pigments.

7. Method according to one of the preceding claims, **characterized in that** the polyamide component comprises up to at most 90% by weight of at least one different compound, preferably glass or carbon fibres.

**FIGURE 1**

**FIGURE 2**

**EP 3 268 202 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1609577 A
- FR 2856003
- US 20050001354 A
- EP 1705052A1 A